# EUROPEAN PATENT APPLICATION

(11) **EP 4 309 953 A1**
(43) Date of publication of application: **24.01.2024**
(21) Application number: 23184496.0
(22) Date of filing: 10.07.2023
(51) Int. Cl.: B60P 1/64, B60P 1/48

(54) **INTERCHANGEABLE ROLLER CONTAINER LIFTING FRAME FOR AN INTERMODAL CONTAINER AND METHOD FOR LOADING AN INTERMODAL CONTAINER**

(30) Priority: 12.07.2022 SE 2250895
(71) Applicant: Joab Jan Olsson AB, 417 29 Göteborg (SE)
(72) Inventor: LINDQUIST, Lars-Erik, 668 93 Ed (SE); LEMÉN, Magnus, 302 37 Halmstad (SE); WULF, Per, 523 72 Timmele (SE)
(74) Representative: Zacco Sweden AB

(57) **Abstract**

The invention relates to an interchangeable roller container lifting frame (1) for an intermodal container (17). The interchangeable roller container lifting frame (1) comprises a frame (2) comprising a first end (3), a second end (4) and a support arrangement (5) connecting the first and second ends (3, 4). The interchangeable roller container lifting frame (1) comprises a loading arrangement (7) and a stabilising arrangement (12). The loading arrangement (7) comprises a first loading arm (8) arranged at the first end (3) and a second loading arm (9) arranged at the second end (4). The first and second loading arms (8, 9) are arranged to move between a loading position and a storing position. The stabilising arrangement (12) comprises a first stabilising unit (13) arranged at the first end (3) and a second stabilising unit (14) arranged at the second end (4), wherein the first and second stabilising units (13, 14) are arranged to move between a loading position and a storing position. The invention also relates to a method for loading an intermodal container (17) on an interchangeable roller container lifting frame (1).

## Description

### TECHNICAL FIELD

The invention relates to an interchangeable roller container lifting frame for an intermodal container. The interchangeable roller container lifting frame comprises a frame comprising a first end, a second end and a support arrangement connecting the first end and the second end. The frame further comprises a fastening device arranged at the first end. The invention further relates to a method for loading an intermodal container onto an interchangeable roller container lifting frame.

### BACKGROUND ART

Intermodal containers are used extensively around the world today and are used to transport a large variety of goods. Transport can be made by boat, rail or truck.

When transporting an intermodal container on a truck, normally only one container can be transported by a truck independently of how the container is loaded on the truck. Examples of how trucks load intermodal containers are for instance side lifters and flatbed trucks comprising various loading arrangements such as hook lifts and cable lift or a cable hoist systems. Only being able to transport one container per truck is inefficient both from an economic and environmental perspective.

Hook lift trucks, roller contact tipper vehicles and trucks with a cable lift or a cable hoist system are normally designed to load and carry specific containers, such as waste containers and roller containers. They are normally not designed to be able to load and carry an intermodal container unless the intermodal container is placed on an interchangeable flat bed, flat rack or roller container frame that can be lifted by the vehicle.

Alternatively, if a hook lift is used to load an intermodal container, a separate connector or transferring device is required to connect the hook lift to the intermodal container. This risks damaging the intermodal container's edges. The connector also limits the load to 10-12 tons. Using a connector requires that the truck bed of the hook lift needs to be extended, for instance with a specific rear joint, such that the function of the truck will be reduced and that the design of the hook lift will be less optimal. This results in that the axle load may be incorrect and that an unnecessary space between the loaded container and the cabin is created. The loading using a connector is also not safe from tipping, is complicated technically, requires that the container and truck be placed on a level surface and is generally impossible to load to another vehicle without having to place the container on the ground again first.

WO 2021/255345 A1 discloses a solution where an interchangeable roller container frame comprises a dock for a connector or transferring device, which in turn can be connected to an intermodal container to load it onto a hook lift truck. Although WO 2021/255345 A1 addresses some of the problems listed above, most of them remain.

There is thus a need for an improvement when it comes to loading/unloading intermodal containers for trucks.

### SUMMARY OF THE INVENTION

One object of the present invention is to provide an inventive interchangeable roller container lifting frame and a method for loading an intermodal container on an interchangeable roller container lifting frame that addresses the previously mentioned problems. This object is achieved by the features of the characterising portion of claims 1 and 11. Variations of the invention are described in the appended dependent claims.

The invention relates to an interchangeable roller container lifting frame for an intermodal container. The interchangeable roller container lifting frame comprises a frame comprising a first end, a second end and a support arrangement connecting the first end and the second end extending in a longitudinal direction. The frame further comprises a loader fastening device arranged at the first end. The interchangeable roller container lifting frame comprises a loading arrangement and a stabilising arrangement. The loading arrangement comprises a first loading arm arranged at the first end and a second loading arm arranged at the second end. The first and second loading arms are arranged to move between a loading position and a storing position. The stabilising arrangement comprises a first stabilising unit arranged at the first end and a second stabilising unit arranged at the second end. The first and second stabilising units are arranged to move between a loading position and a storing position.

The invention provides an interchangeable roller container lifting frame such as for instance an interchangeable flat bed or flat rack for a truck. The truck can be any type that can load and unload such an interchangeable roller container lifting frame. Non-limiting examples are hook lift trucks, roller contact tipper vehicles and trucks with a cable lift or a cable hoist system, but other types of trucks can also benefit from the interchangeable roller container lifting frame of the invention. The interchangeable roller container lifting frame can be considered to function as an adapter that can load an intermodal container onto itself and a truck using its lifting equipment can thereafter load the interchangeable roller container lifting frame onto the truck. It is also possible to use the interchangeable roller container lifting frame to load an intermodal container onto a separate loader frame or roller container frame that thereafter can be loaded onto a trailer. In this way, one truck can carry not only one container but up to three containers with one container arranged on the roller container lifting frame and two containers arranged on roller container frames on a trailer. This improves the economy of the truck as more containers can be transported by a single truck and at the same time reduces the environmental load of the truck as fewer journeys have to be made to transport the same amount of containers.

The loader fastening device can be adapted to fit any type of truck lifting equipment as mentioned above. By using the interchangeable roller container lifting frame itself to load the intermodal container, the lifting of the container can be made safely as the intermodal container only needs to be lifted at most approximately between 25 - 50 centimetres above ground. In order to have maximum flexibility during loading, the loading arms can be controlled individually.

In the loading position, the first and second loading arms may be arranged to be placed between a first short side and a second short side of an intermodal container and a first attachment arrangement of the first loading arm and a second attachment arrangement of the second loading arm may be arranged to attach to the intermodal container's corner castings. Further, in the storing position, the first and second loading arms are arranged to have lifted the intermodal container onto the interchangeable roller container lifting frame. This ensures a safe way of loading the intermodal container onto the interchangeable roller container lifting frame. The attachment arrangements can be arranged to be attached to any of the top or bottom corner castings on the intermodal container.

The first and second loading arms may be telescopic loading arms or folding loading arms. In order to load the intermodal container onto the interchangeable roller container lifting frame, different types of known loading arms can be used. Depending on national/international standards, the interchangeable roller container lifting frame can be adapted to suit any loading/unloading situation.

The first attachment arrangement and the second attachment arrangement may be arranged to attach to the intermodal container's bottom corner castings. This provides a safe way of lifting the intermodal container and requires shorter loading arms than if the upper corner castings is used. By using the bottom corner castings, taller containers can be lifted with the same loading arms as containers with normal height.

The first and second stabilising units in the loading position may be arranged to extend such that an end part of the first and second stabilising units extend past a midpoint of the intermodal container's width when the intermodal container is placed alongside the interchangeable roller container lifting frame. In this way, the interchangeable roller container lifting frame will not be at risk of tipping over when loading/unloading the intermodal container.

The first and second stabilising units may be controlled individually. This ensures that the interchangeable roller container lifting frame can be made level before loading. This makes the interchangeable roller container lifting frame more flexible as it can be used on surfaces that are not entirely level.

The first and second stabilising units may be telescopic stabilising units. The stabilising units may for instance be of a kind that exist on many types of loading/lifting equipment today.

The loading arrangement and stabilising arrangement may be controlled by a hydraulic system. In this way, it is easy to control the movement of the various parts of the interchangeable roller container lifting frame during loading/unloading.

The hydraulic system may be arranged to connect to an external hydraulic system. Almost all trucks today contain some form of hydraulic system that controls various functions on the trucks. One common function that requires a hydraulic system is tipping of an attached trailer. This hydraulic system contains fittings that makes it possible to attach the trucks hydraulic system to the interchangeable roller container lifting frame's hydraulic system.

The hydraulic system may be arranged on the interchangeable roller container lifting frame. Alternatively, the interchangeable roller container lifting frame may comprise its own hydraulic system with a tank for hydraulic fluid and a pump to provide hydraulic fluid flow to the loading arrangement and stabilising arrangement.

The invention further relates to a method for loading an intermodal container on an roller container frame using an interchangeable roller container lifting frame comprising a frame comprises a first end, a second end and a support arrangement connecting the first end and the second end extending in a longitudinal direction, wherein the frame further comprises a fastening device arranged at the first end. The method comprises:
- Arranging a loading arrangement on the interchangeable roller container lifting frame comprising a first loading arm arranged at the first end of the frame and a second loading arm arranged at the second end of the frame, wherein the first and second loading arms are arranged to move between a loading position and a storing position,
- Arranging a stabilising arrangement interchangeable roller container lifting frame comprising a first stabilising unit arranged at the first end of the frame and a second stabilising unit arranged at the second end of the frame, wherein the first and second stabilising units are arranged to move between a loading position and a storing position.
- Placing an intermodal container alongside the interchangeable roller container lifting frame,
- Moving the first and second stabilising units to a loading position,
- Moving the first and second loading arms into a loading position where the first and second arms are arranged to be placed between a first short side and a second short side of an intermodal container,
- Attaching a first attachment arrangement of the first loading arm and a second attachment arrangement of the second loading arm to the intermodal container's corner castings,
- Raising the intermodal container from the ground with the first and second loading arms, and
- Moving the first and second loading arms to a storing position where the intermodal container is lowered onto the interchangeable roller container lifting frame,
- Moving the first and second stabilising units to a storing position, or
- Moving a roller container frame underneath the raised intermodal container,
- Lowering the intermodal container onto the separate interchangeable roller container frame,
- Removing the separate interchangeable roller container frame.

The method provides the same advantages as described above.

The method may comprise:
- Moving the first and second stabilising units to respective loading positions individually.

### BRIEF DESCRIPTION OF THE DRAWINGS

Figure 1 schematically shows a perspective view of an interchangeable roller container lifting frame according to the invention without an intermodal container,
Figure 2a schematically shows a perspective view of an interchangeable roller container lifting frame according to the invention with an intermodal container placed alongside it with the loading and stabilising arrangements in their loading positions,
Figure 2b schematically shows a top view of an interchangeable roller container lifting frame according to the invention with an intermodal container placed alongside it with the loading and stabilising arrangements in their loading positions,
Figure 3a schematically shows a perspective view of an interchangeable roller container lifting frame according to the invention in an intermediation position between a loading position and storing position,
Figure 3b schematically shows a top view of an interchangeable roller container lifting frame according to the invention in an intermediation position between a loading position and storing position,
Figure 4a schematically show a perspective view of an interchangeable roller container lifting frame according to the invention with the intermodal container placed on the interchangeable roller container lifting frame with the loading and stabilising arrangements in their storing positions,
Figure 4b schematically show a top view of an interchangeable roller container lifting frame according to the invention with the intermodal container placed on the interchangeable roller container lifting frame with the loading and stabilising arrangements in their storing positions,
Figure 5 schematically shows an alternative to lifting the intermodal container onto the interchangeable roller container lifting frame,
Figure 6 schematically shows a hook lift truck preparing to load an interchangeable roller container lifting frame,
Figure 7 schematically shows a hook lift truck with an interchangeable roller container lifting frame loaded onto the truck bed,
Figure 8 schematically shows a hook lift truck with an interchangeable roller container lifting frame loaded onto the truck bed with a trailer with two additional intermodal container loaded on it.

### DETAILED DESCRIPTION

Within the context of this application, with an intermodal container is meant a container (alternatively a shipping container or a freight container) that is a standardized container designed and built for intermodal freight transport. This means that such containers can be used across different modes of transport - from ship to rail to truck - without unloading and reloading their cargo.

Examples of intermodal containers are containers conforming to ISO 668:2013-2020, a pallet-wide container, a 48/53-foot container, a US military container (Bicon, Tricon, Quadcon) or Japanese 12-foot containers. The size (length/width) of an interchangeable roller container lifting frame according to the invention can be adapted to fit the length/width of the intermodal container it is intended to be used for. Different height containers such as High Cube or Hi-Cube (HC / HQ) containers can be loaded by the interchangeable roller container lifting frame.

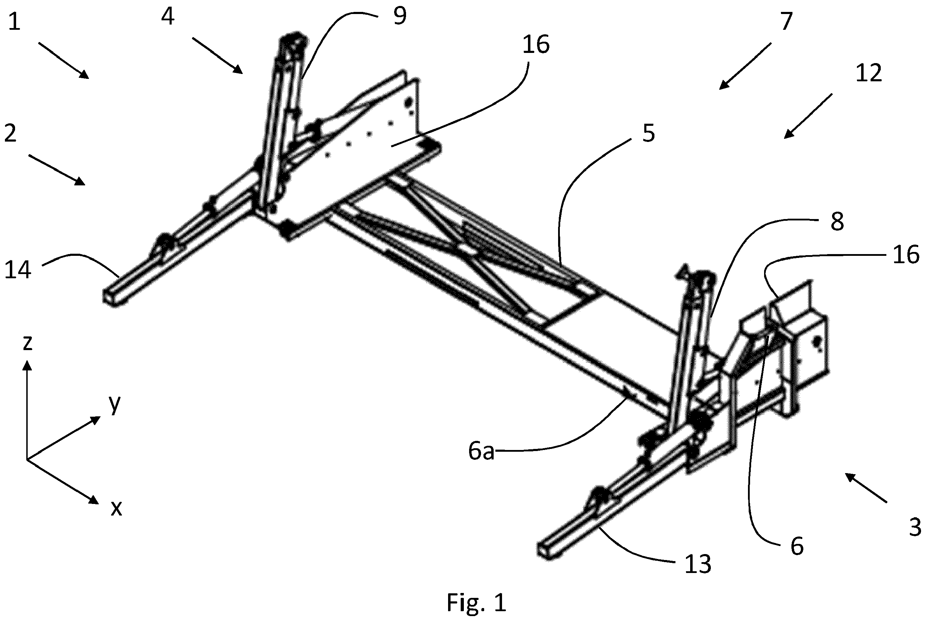

Figure 1 schematically shows a perspective view of an interchangeable roller container lifting frame 1 according to the invention without an intermodal container loaded onto it. The interchangeable roller container lifting frame 1 is arranged on the ground or on a surface large enough for the interchangeable roller container lifting frame 1 and an intermodal container alongside the interchangeable roller container lifting frame 1. The interchangeable roller container lifting frame 1 comprises a frame 2 having an extension in a longitudinal or length direction x, a lateral or width direction y, vertical, and height direction z. The frame 2 comprises a first end 3, a second end 4 and a support arrangement 5 connecting the first end 3 and the second end 4The first end 3 and the second end 4 are arranged at opposite longitudinal ends of the interchangeable roller container lifting frame 1.

The support arrangement 5 comprises one or more structural elements that provide support both to the frame 2 itself and to an intermodal container once it is placed on the interchangeable roller container lifting frame 1. The support arrangement 5 may be covered as to provide a floor-like surface over part or whole of the support arrangement 5.

The frame 2 further comprises a loader fastening device 6 arranged at the first end 3 arranged to provide a connection means for hook lifts. Other types of loader fastening devices 6 can be arranged on the interchangeable roller container lifting frame 1 in order for the interchangeable roller container lifting frame 1 to be able to be loaded with many sorts of truck loading arrangements. One such example is a loader fastening device 6a for trucks comprising a cable lift or cable hoist system, in some countries known as a wirehejs.

The roller container lifting frame 1 is thus a roller container lifting frame 1 for hook lift trucks, roller contact tipper vehicles and/or wirehejs.

It is also possible for a loader fastening to be arranged on the support arrangement 5 between the first end 3 and second end 4. This arrangement can be used to load the interchangeable roller container lifting frame 1 with a skip loader.

The design of various features and dimensions of the frame 2 of the roller container lifting frame 1 complies with one or more of the standards DIN 30722-1, SS3021, SS3659, Stanag 2413, SFS 4417, CHEM TS8 and AFNOR NF R17-108.

Arranged on the first and second end 3, 4 of the frame 2, the interchangeable roller container lifting frame 1 comprises a loading arrangement 7, wherein the loading arrangement 7 comprises a first loading arm 8 arranged at the first end 3 and a second loading arm 9 arranged at the second end 4. The first loading arm 8 comprises a first attachment arrangement 10 and the second loading arm 9 comprises a second attachment arrangement 11.

The first and second loading arms 8, 9 are arranged to move between a loading position and a storing position. In the loading position, the first and second loading arms 8, 9 are arranged to be placed between a first short side and a second short side of an intermodal container extending in the lateral direction y when placed in front of the interchangeable roller container lifting frame 1 and the first attachment arrangement 10 of the first loading arm 8 and the second attachment arrangement 11 of the second loading arm are arranged to attach to the intermodal container's corner castings. The first and second attachment arrangements 10, 11 are for instance chains or lifting straps with suitable fittings to be attached to the corner castings of the intermodal container as is known in the art. In the storing position, the first and second loading arms 8, 9 are arranged to have lifted the intermodal container onto the interchangeable roller container lifting frame 1.

The interchangeable roller container lifting frame 1 further comprises a stabilising arrangement 12 comprising a first stabilising unit 13 arranged at the first end 3 and a second stabilising unit 14 arranged at the second end 4 of the frame 2. The first and second stabilising units 13, 14 are arranged to move between a loading position and a storing position. In the loading position, the first and second stabilising units 13, 14 are arranged to extend such that an end part 15 of the first and second stabilising units 13, 14 extend past a lateral midpoint M of the intermodal container's width when the intermodal container is placed alongside the interchangeable roller container lifting frame 1.

The loading arrangement 7 and stabilising arrangement 12 are in the example of the figures powered by a hydraulic system. The hydraulic system comprises the necessary fittings, valves, cylinders, filters to perform the movements described and to carry the load of the container during loading/unloading etc., and will not be described in detail. The first and second end 3, 4 may comprise essentially vertically extending support frames 16 for the loading and stabilising arrangements 7, 12. This or other suitable support structures arranged to provide support for the loading and stabilising arrangements 7, 12 will also assist in preventing the intermodal container from moving in the longitudinal direction, thereby protecting the loading and stabilising arrangements 7, 12 from damage from the intermodal container. The hydraulic system is arranged on the frame 2 such that hydraulic fluid runs in conduits arranged in or on the frame 2 between the first and second ends 3, 4 of the frame 2 so that hydraulic fluid is provided to the second loading arm 9 and second stabilising unit 14.

The hydraulic system comprises a control unit arranged on the first end 3 of the frame 2 of the interchangeable roller container lifting frame 1. In one example, the hydraulic system comprises a connection unit comprising fittings arranged to connect the hydraulic system of the interchangeable roller container lifting frame 1 to the hydraulic system of the truck that is arranged to load the interchangeable roller container lifting frame 1 onto its truck bed.

Alternatively, the interchangeable roller container lifting frame 1 may be equipped with its own hydraulic system controlled by the control unit arranged at the first end 3. In this example, the interchangeable load comprises its own hydraulic system with a tank for hydraulic fluid and a pump to provide hydraulic fluid flow to the loading arrangement 7 and stabilising arrangement 12.

The control unit of the hydraulic system can be controlled either via a radio remote control or by a control panel on the interchangeable roller container lifting frame 1.

The interchangeable roller container lifting frame 1 can be adapted to load/unload either to the left or to the right in the lateral direction. In the example of figure 1 and the following figures, the interchangeable roller container lifting frame 1 loads and unloads on the right hand side. In this way, the interchangeable roller container lifting frame 1 can be adapted for various scenarios, such as for instance left-hand traffic or right-hand traffic or different terminal or other loading centres' layouts.

The materials used to construct the interchangeable roller container lifting frame 1 are the same as is used today, and can be adapted for instance in order to improve the load capacity of the interchangeable roller container lifting frame 1 or to improve durability.

In figure 1, the loading arms 8, 9 are in their storing positions while the stabilising units have been lowered to their loading position.

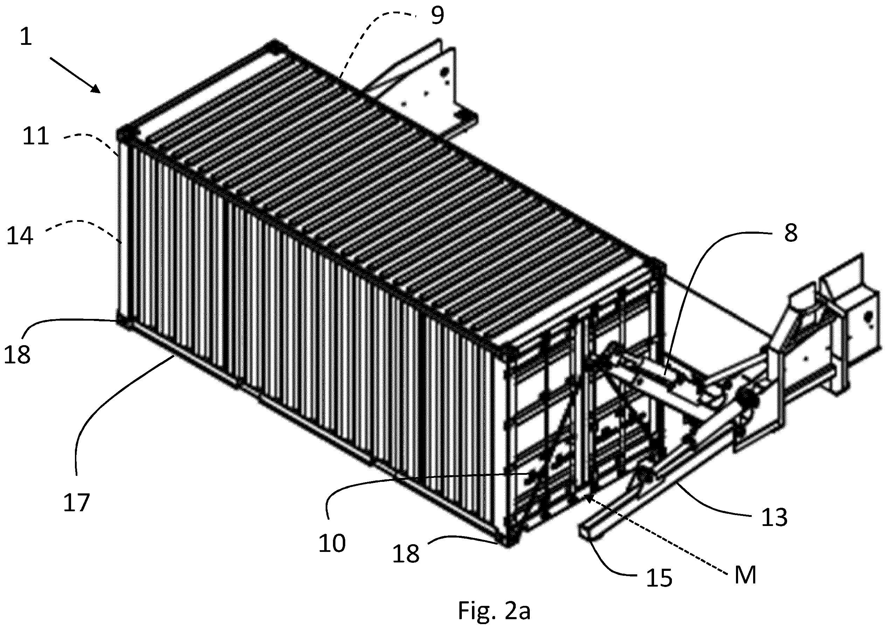

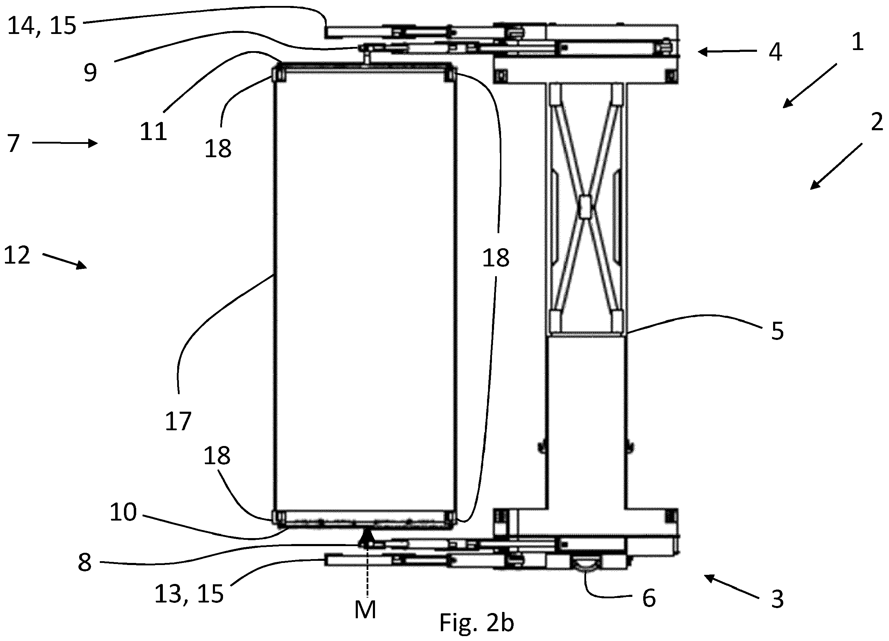

Figures 2a and 2b schematically shows a perspective view and a top view respectively of an interchangeable roller container lifting frame 1 according to the invention with an intermodal container 17 placed alongside it with the loading and stabilising arrangements 7, 12 in their loading positions.

The loading arms 8, 9 have now been moved to their loading positions and the first and second attachment means have been attached to the bottom corner castings 18 of the intermodal container 17. As can be seen from the figures, the first and second stabilising units 13, 14 in the loading position have extended in the lateral direction such that an end part 15 of the first and second stabilising units 13, 14 extend past a midpoint M of the intermodal container's 17 width or short sides when the intermodal container 17 is placed alongside the interchangeable roller container lifting frame 1. In this position, the intermodal container 17 is ready to be moved onto the interchangeable roller container lifting frame 1.

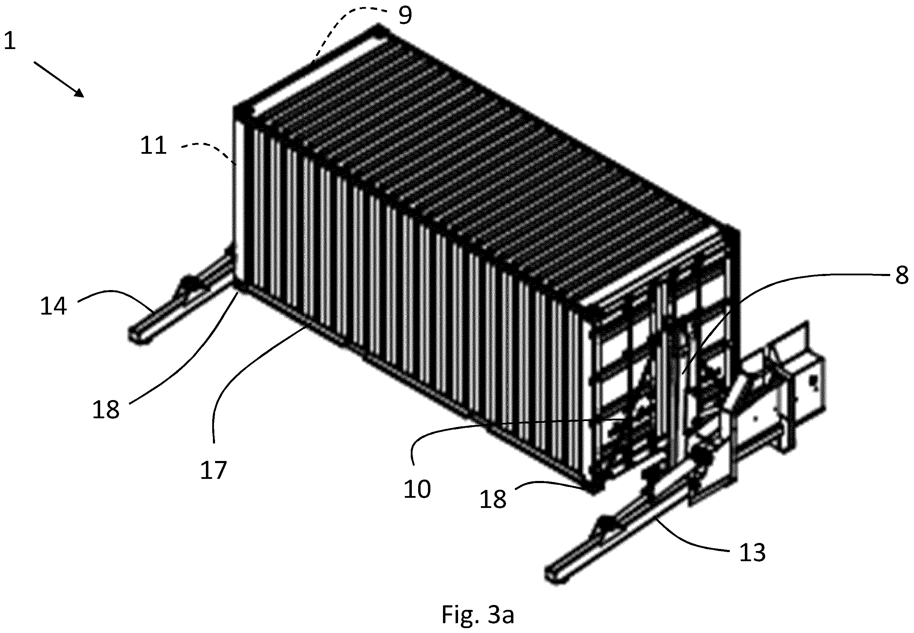

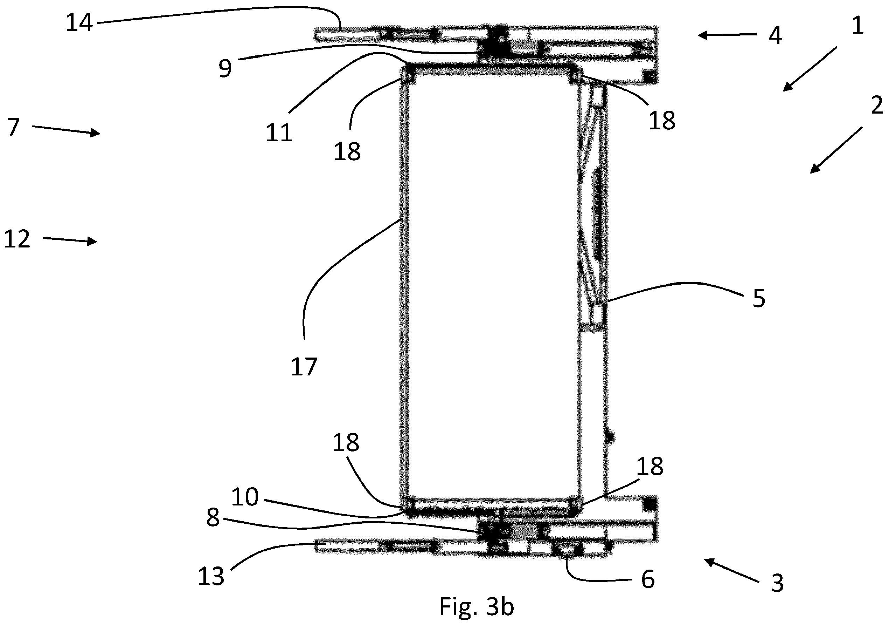

Figures 3a and 3b schematically shows a perspective view and a top view respectively of an interchangeable roller container lifting frame 1 according to the invention in an intermediation position between a loading position and storing position. The intermodal container 17 have now been raised off the ground and the loading arms 8, 9 have started to move to their storing positions.

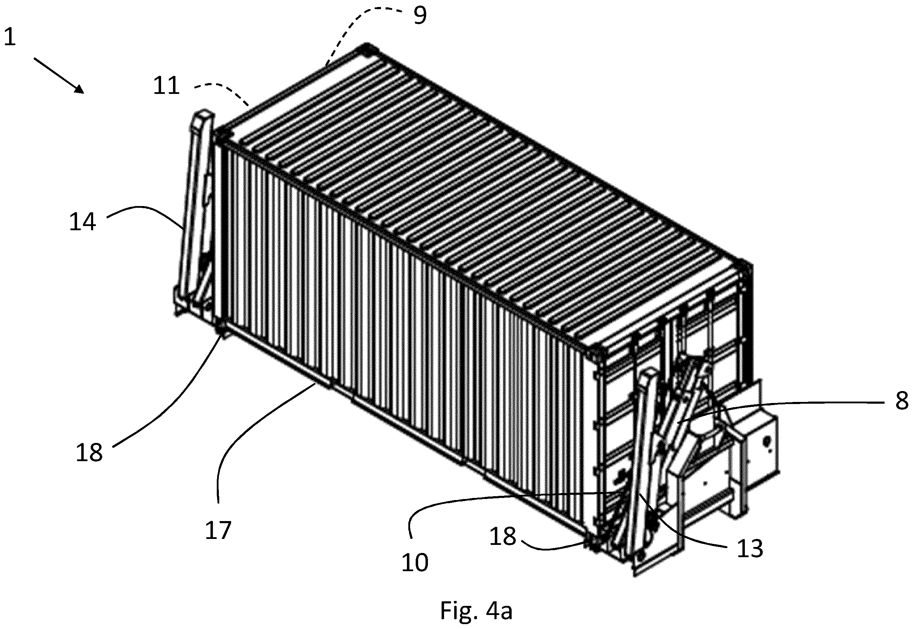

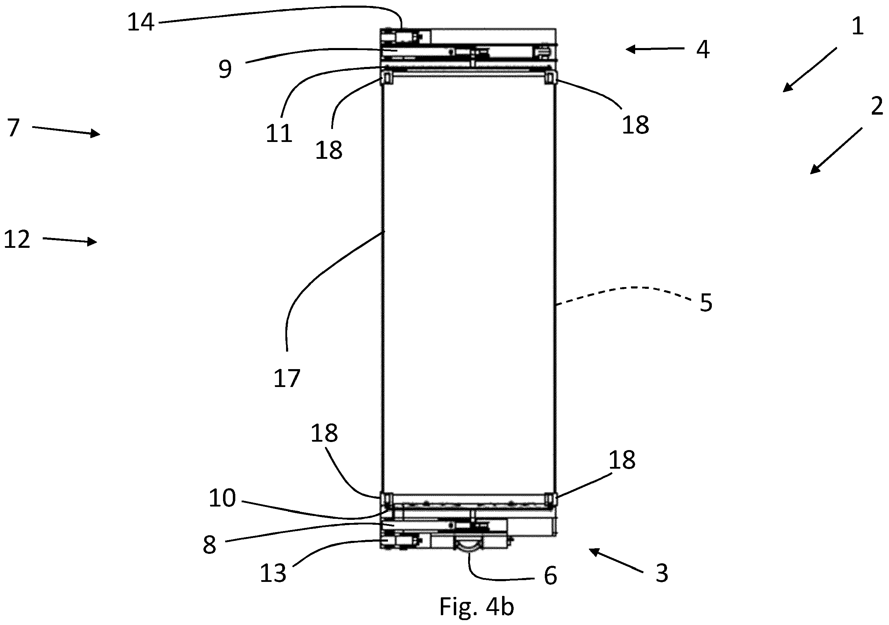

Figures 4a and 4b schematically show a perspective view and a top view respectively of an interchangeable roller container lifting frame 1 according to the invention with the intermodal container 17 placed on the interchangeable roller container lifting frame 1 with the loading and stabilising arrangements 7, 12 in their storing positions. The intermodal container 17 has now been placed onto the support arrangement 5 of the interchangeable roller container lifting frame 1 and is locked onto the interchangeable roller container lifting frame 1 by standard container locking arrangements of the interchangeable roller container lifting frame 1 arranged to interact with the bottom corner castings 18 of the intermodal container 17. The interchangeable roller container lifting frame 1 can now be loaded onto a truck and moved away.

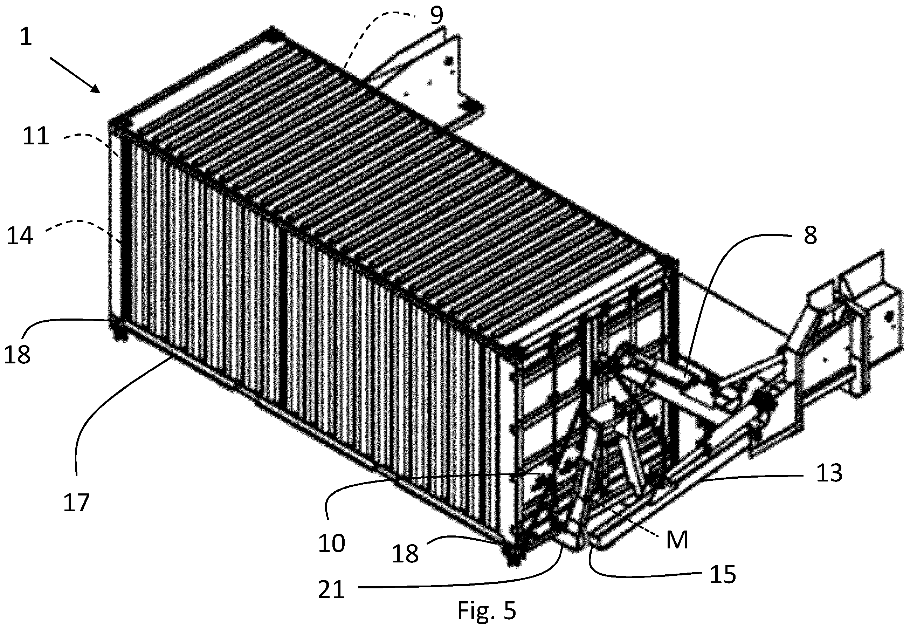

Figure 5 schematically shows an alternative to lifting the intermodal container onto the interchangeable roller container lifting frame. As an alternative to lifting the intermodal container 17 onto the interchangeable roller container lifting frame 1, the interchangeable roller container lifting frame 1 can be used to move the intermodal container 17 onto a loader frame 21 without the loading and stabilising arrangements 7, 12. This is done by raising the intermodal container 17 from the ground with the first and second loading arms 8, 9 and moving a loader frame or roller container frame 21 underneath the raised intermodal container 17 and lowering the intermodal container 17 onto the separate interchangeable roller container frame before removing the roller container frame 21. In this way, one truck can arrange the loading of multiple containers onto separate roller container frames 21 and load them onto a trailer. This allows the truck to increase the maximum number of containers it can transport. The roller container frame 21 is for instance a hook lift loader frame with standard twist locks that are commercially available today.

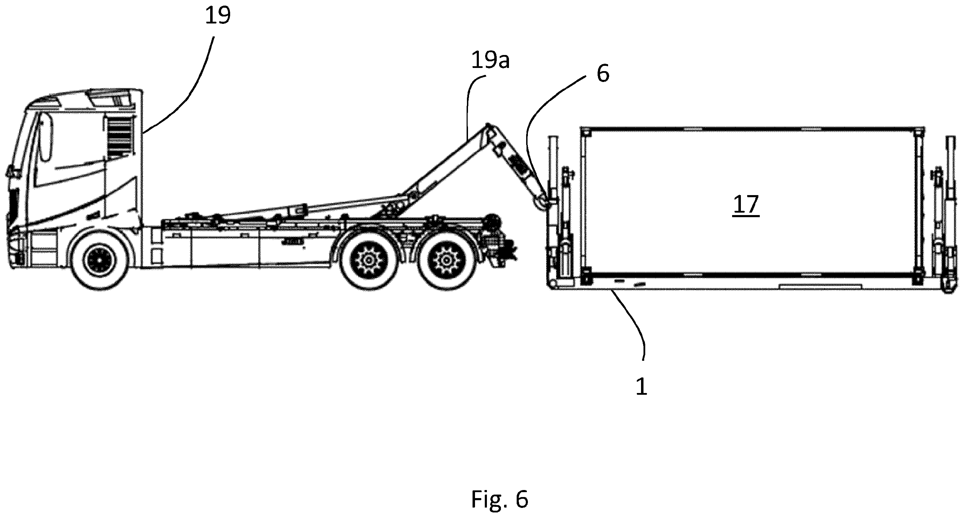

Figure 6 schematically shows a hook lift truck 19 preparing to load an interchangeable roller container lifting frame 1 with an intermodal container 17 loaded onto it. The hook lift 19a is attached to the loader fastening device 6. When the intermodal container 17 is loaded onto the interchangeable roller container lifting frame 1, the interchangeable roller container lifting frame 1 according to the invention functions as any interchangeable roller container lifting frame 1.

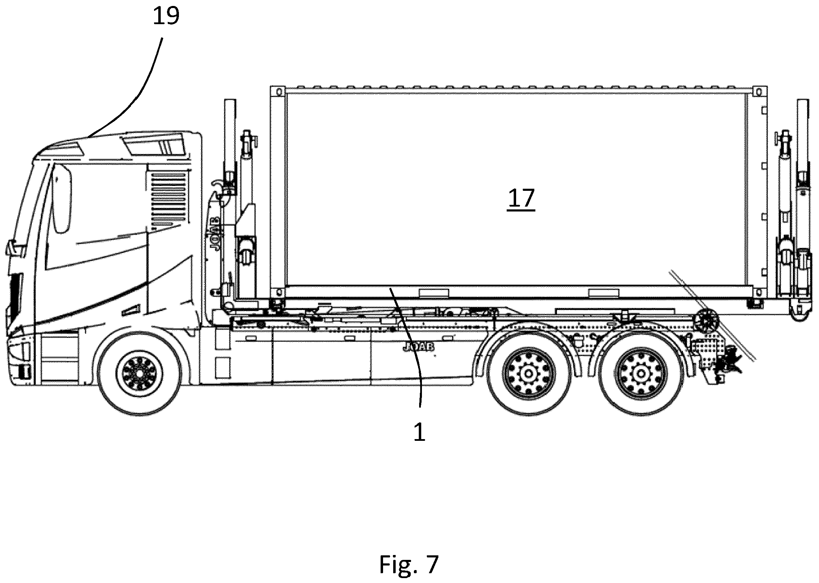

Figure 7 schematically shows a hook lift truck 19 with an interchangeable roller container lifting frame 1 loaded onto the truck bed. The interchangeable roller container lifting frame 1 is now loaded onto the hook lift truck 19.

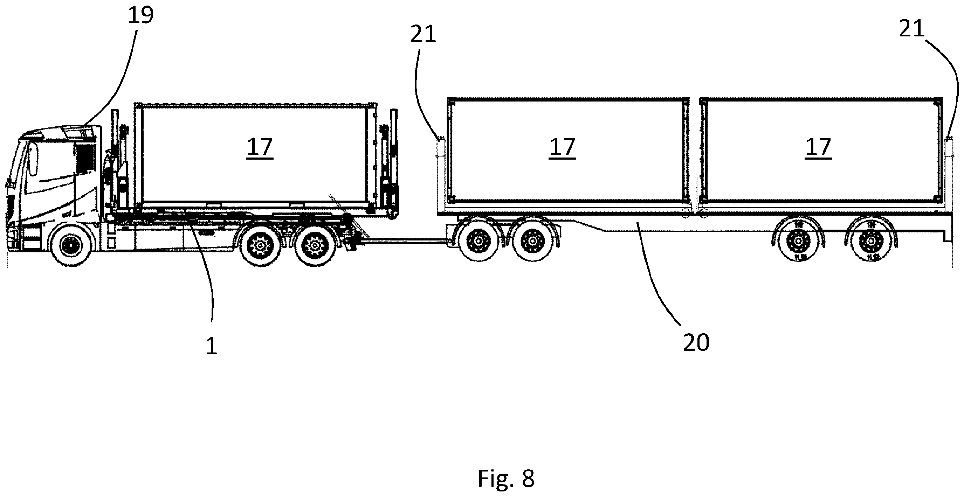

Figure 8 schematically shows a hook lift truck 19 with an interchangeable roller container lifting frame 1 loaded onto the truck bed with a trailer 20 with two additional intermodal containers 17 loaded on it. As an example of one advantage with the interchangeable roller container lifting frame 1 according to the invention, figure 7 shows a hook lift truck 19 having an interchangeable roller container lifting frame 1 loaded onto its truck bed using the hook lift and a trailer 20 connected to the hook lift truck with two intermodal containers 17 loaded onto loader frames 21 without loading and stabilising arrangements 7, 12 as shown in figure 5.

In figures 6-8, the hook lift truck 19 is to be seen as an example and can be replaced by for instance a skip loading truck. The loader fastening device 6 on the frame 2 is then adapted accordingly.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description are to be regarded as illustrative in nature, and not restrictive.

### References:

1. Interchangeable roller container lifting frame
2. Frame
3. First end
4. Second end
5. Support arrangement
6. Loader fastening device for hook lift
   a. loader fastening device for cable lift or cable hoist system
7. Loading arrangement
8. First loading arm
9. Second loading arm
10. First attachment arrangement
11. Second attachment arrangement
12. Stabilising arrangement
13. First stabilising unit
14. Second stabilising unit
15. End part of first and second stabilising unit
16. Support frames
17. Intermodal container
18. Bottom corner castings
19. Hook lift truck
   a. Hook lift
20. Trailer
21. Loader frame
M: Midpoint of intermodal containers width

## Claims

1. Interchangeable roller container lifting frame (1), wherein the interchangeable roller container lifting frame (1) comprises a frame (2) comprising a first end (3), a second end (4) and a support arrangement (5) connecting the first end (3) and the second end (4) extending in a longitudinal direction (x), wherein the frame (2) further comprises a loader fastening device (6) arranged at the first end (3), **characterized in that** the interchangeable roller container lifting frame (1) comprises a loading arrangement (7) and a stabilising arrangement (12), wherein the loading arrangement (7) comprises a first loading arm (8) arranged at the first end (3) and a second loading arm (9) arranged at the second end (4), wherein the first and second loading arms (8, 9) are arranged to move between a loading position and a storing position and wherein the stabilising arrangement (12) comprises a first stabilising unit (13) arranged at the first end (3) and a second stabilising unit (14) arranged at the second end (4), wherein the first and second stabilising units (13, 14) are arranged to move between a loading position and a storing position.

2. Interchangeable roller container lifting frame (1) according to claim 1, wherein in the loading position the first and second loading arms (8, 9) are arranged to be placed between a first short side and a second short side of an intermodal container (17) and a first attachment arrangement (10) of the first loading arm (8) and a second attachment arrangement (11) of the second loading arm are arranged to attach to the intermodal container's (17) corner castings, and wherein in the storing position, the first and second loading arms (8, 9) are arranged to have lifted the intermodal container (17) onto the interchangeable roller container lifting frame (1).

3. Interchangeable roller container lifting frame (1) according to claim 1 or 2, wherein the first and second loading arms (8, 9) are telescopic loading arms or folding loading arms.

4. Interchangeable roller container lifting frame (1) according to claim 2 or 3, wherein the first attachment arrangement (10) and the second attachment arrangement (11) are arranged to attach to the intermodal container's (17) bottom corner castings (18).

5. Interchangeable roller container lifting frame (1) according to any one of the preceding claims, wherein the first and second stabilising units (13, 14) in the loading position are arranged to extend such that an end part (15) of the first and second stabilising units (13, 14) extend past a midpoint of the intermodal container's (17) width when the intermodal container (17) is placed alongside the interchangeable roller container lifting frame (1).

6. Interchangeable roller container lifting frame (1) according to any one of claims 4-6, wherein the first and second stabilising units (13, 14) are controlled individually.

7. Interchangeable roller container lifting frame (1) according to any one of the preceding claims, wherein the first and second stabilising units (13, 14) are telescopic stabilising units.

8. Interchangeable roller container lifting frame (1) according to any one of the preceding claims, wherein the loading arrangement (7) and stabilising arrangement (12) are controlled by a hydraulic system.

9. Interchangeable roller container lifting frame (1) according to claim 8, wherein the hydraulic system is arranged to connect to an external hydraulic system.

10. Interchangeable roller container lifting frame (1) according to claim 8, wherein the hydraulic system is arranged on the interchangeable roller container lifting frame (1).

11. Interchangeable load unit adapter (1) according to any one of the preceding claims, wherein the loader fastening device (6) provides a connection means for hook lift trucks, roller contact tipper vehicles and/or wirehejs.

12. Method for loading an intermodal container (17) on a roller container frame using an interchangeable roller container lifting frame (1) comprising a frame (2) comprising a first end (3), a second end (4) and a support arrangement (5) connecting the first end (3) and the second end (4) extending in a longitudinal direction (x), wherein the frame (2) further comprises a loader fastening device (6) arranged at the first end (3), wherein the method comprises:
- Arranging a loading arrangement (7) on the interchangeable roller container lifting frame (1) comprising a first loading arm (8) arranged at the first end (3) of the frame (2) and a second loading arm arranged at the second end (4) of the frame (2), wherein the first and second loading arms (8, 9) are arranged to move between a loading position and a storing position,
- Arranging a stabilising arrangement (12) interchangeable roller container lifting frame (1) comprising a first stabilising unit (13) arranged at the first end (3) of the frame (2) and a second stabilising unit (14) arranged at the second end (4) of the frame (2), wherein the first and second stabilising units (13, 14) are arranged to move between a loading position and a storing position.
- Placing an intermodal container (17) alongside the interchangeable roller container lifting frame (1),
- Moving the first and second stabilising units (13, 14) to a loading position where the stabilising units are arranged to extend such that an end part (15) of the first and second stabilising units (13, 14) extend past a midpoint of the intermodal container's (17) width when the intermodal container (17) is placed alongside the interchangeable roller container lifting frame (1),
- Moving the first and second loading arms (8, 9) into a loading position where the first and second arms are arranged to be placed between a first short side and a second short side of an intermodal container (17),
- Attaching a first attachment arrangement (10) of the first loading arm (8) and a second attachment arrangement (11) of the second loading arm to the intermodal container's (17) corner castings,
- Raising the intermodal container (17) from the ground with the first and second loading arms (8, 9), and
- Ia: Moving the first and second loading arms (8, 9) to a storing position where the intermodal container (17) is lowered onto the interchangeable roller container lifting frame (1),
- Ib: Moving the first and second stabilising units (13, 14) to a storing position, or
- IIa: Moving a roller container frame (21) underneath the raised intermodal container (17),
- IIb: Lowering the intermodal container (17) onto the roller container frame (21),
- IIc: Removing the roller container frame (21) with the intermodal container (17).

13. Method according to claim 11, wherein the method comprises:
- Moving the first and second stabilising units (13, 14) to respective loading positions individually.
